# EUROPEAN PATENT APPLICATION

(11) **EP 3 190 446 A2**
(43) Date of publication of application: **12.07.2017**
(21) Application number: 16203903.6
(22) Date of filing: 13.12.2016
(51) Int. Cl.: G02B 27/01, G02B 17/08

(54) **OPTICAL IMAGING APPARATUS**

(30) Priority: 14.12.2015 US 201562266893 P
(71) Applicant: Sitronix Technology Corp, Jhubei City, Hsinchu Country 302 (TW)
(72) Inventor: Hsiung, Chuan-Pin, 302 Hsinchu County (TW)
(74) Representative: Lang, Christian

(57) **Abstract**

The present invention relates to an optical imaging apparatus, which comprises a display device, a reflection module, and an optical device. The display device displays a display information image. The reflection module is disposed on the display path of the display information image, shrinks the display information image, and reflects the display information image to form a reflection image. The optical device is disposed on the reflection path of the reflection image and reflects the reflection image to form a projection image. The head-up display according to the present invention is applicable to larger display devices with higher definition for providing better display content and effects. Beside, the image size may be adjusted in an optical method for solving the oversize problem of displays.

## Description

### FIELD OF THE INVENTION

The present invention relates generally to an optical apparatus, and particularly to an optical imaging apparatus.

### BACKGROUND OF THE INVENTION

A Head-Up Display (HUD) is an auxiliary instrument applied extensively to various vehicles at present. The "Head-Up" means that the driver needs not to bow his head before he may see the important information he needs. HUDs appeared first in airplanes in the purpose of lowering the frequency the pilots needed to bow their heads for checking indicators and thus avoiding interruption of attention and loss on situation awareness. Obviously, HUDs may improve flight safety.

HUDs utilize the principle of optical reflection to projecting important flight-related information onto a plate of glass. Text and images are projected to a coated lens (the beam splitter), balanced, and reflected into a user's eyes. When a pilot looks forward through an HUD, he may fuse external scenes and the data displayed on the HUD. The design purpose of an HUD is to avoid a user from bowing his head to check the data displayed by indicators. Thereby, during the flying process, the delay and discomfort caused by temporary ignorance of fast changes of the external environment and continuous adjustment of the focal lengths of the eyes while bowing a user's head may be prevented.

In addition, owing to limitations in the structure, HUDs may only adopt small display devices. Small display devices are difficult to fabricate. Besides, they also have the shortcoming of insufficient light transmittance.

### SUMMARY

An objective of the present invention is to provide an optical imaging apparatus. The optical imaging apparatus may adjust the size of the display information image of oversized displays. Thereby, the display information image may fit to an HUD.

Another objective of the present invention to provide an optical imaging apparatus, which corresponds the alignment mark of the alignment information displayed on the optical device to the alignment light spot of the alignment member for adjusting the optical device to the correct corresponding position.

The present invention provides an optical imaging apparatus, which comprises a display device, a reflection module, and an optical device. The display device displays a display information image. The reflection module is disposed on the display path of the display information image, shrinks the display information image, and reflects the display information image to form a reflection image. The optical device is disposed on the reflection path of the reflection image and reflects the reflection image to form a projection image.

### BRIEF DESCRIPTION OF THE DRAWINGS

Figure 1 shows a cross-sectional view of the optical imaging apparatus according to the first embodiment of the present invention;
Figure 2 shows a side view of the reflection device according to the first embodiment of the present invention;
Figure 3 shows a cross-sectional view of the optical imaging apparatus according to the second embodiment of the present invention;
Figure 4 shows a side view of the reflection device according to the second embodiment of the present invention;
Figure 5A shows a schematic diagram of the optical device according to the present invention; and
Figure 5B shows a usage schematic diagram of the optical device according to the present invention.

### DETAILED DESCRIPTION

In order to make the structure and characteristics as well as the effectiveness of the present invention to be further understood and recognized, the detailed description of the present invention is provided as follows along with embodiments and accompanying figures.

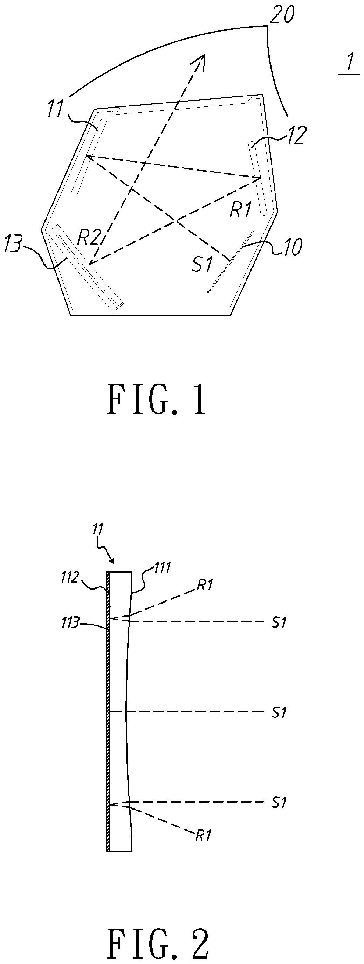

Please refer to Figure 1, which shows a cross-sectional view of the optical imaging apparatus according to the first embodiment of the present invention. As shown in the figure, the present embodiment provides an optical imaging apparatus 1 applicable to HUDs. An HUD is an auxiliary instrument applied extensively to various vehicles. It enables a driver to check the vehicle status and the data displayed on indicators without bowing his head, and thus avoiding interruption of attention and loss on situation awareness. Thereby, the safety of driving vehicles may be improved. The optical imaging apparatus 1 according to the present embodiment comprises a display device 10, a reflection module 20, and an optical device 13.

The display device 10 displays a display information image. The reflection module 20 is disposed on the display path S1 of the display information image. The reflection module 20 shrinks the display information image and reflects the display information image to form a reflection image. The optical device 13 is disposed on the reflection paths R1, R2 of the reflection image and reflects the reflection image to a projection image.

According to the present embodiment, the reflection module 20 further includes a first reflection device 11 and a second reflection device 12. The first reflection device 11 is disposed on the display path S1 of the display information image. This path is located between the display device 10 and the first reflection device 11. The first reflection device 11 shrinks the display information image and reflects the display information image to form a first reflection image. The second reflection device 12 is disposed on the reflection path R1 of the first reflection image. This path is located between the first reflection device 11 and the second reflection device 12. The second reflection device 12 shrinks the first reflection image and reflects the first reflection image to form a second reflection image, which is a reflection image. The optical device 13 is disposed on the reflection path R2 of the second reflection image. The path is located between the second reflection device 12 and the optical device 13. The first reflection image and the second reflection image shrink the display information image, respectively. In other words, the image contents of the first and second reflection images are shrunk display information images. Namely, the first reflection image is the shrunk display information image; the second reflection image is the shrunk first reflection image.

The optical imaging apparatus 1 according to the present invention uses the first and second reflection devices 11, 12 to shrink and reflect the display information image. The image size of the display information image is shrunk by using the property of a concave lens. Thereby, larger displays with higher definition may be adopted. In addition, better image display effects and light transmittance may be achieved.

Please refer to Figure 2, which shows a side view of the reflection device according to the first embodiment of the present invention. As shown in the figure, the first reflection device 11 is a single concave reflection lens, namely, a plano-concave lens. A single concave reflection lens includes a concave surface 111 and a plane 112 opposing to the concave surface 111. A reflection layer 113 is coated on the plane 112. The concave surface 111 of the first reflection device 11 faces to the display path S1. The display information image passes through the concave surface 111 and illuminates to the reflection layer 113. By using the reflection layer 113, the first reflection image is formed. Thereby, the first reflection image is the shrunk image of the display information image.

According to an embodiment of the present invention, the second reflection device 12 may be a plano-concave reflection lens as well. Then the concave surface 111 of the second reflection device 12 faces to the reflection path R1 of the first reflection image. The first reflection image passes through the concave surface and the second reflection image is formed by using the reflection layer 113. Thereby, the second reflection image is the shrunk image of the first reflection image.

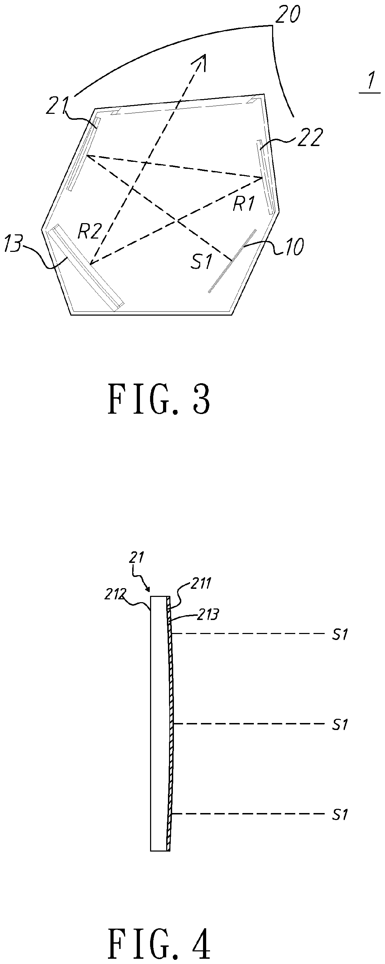

Please refer to Figure 3, which shows a cross-sectional view of the optical imaging apparatus according to the second embodiment of the present invention. As shown in the figure, according to the present embodiment, the first reflection device 21 and/or the second reflection device 22 are plano-convex lenses. Please refer to Figure 4, which shows a side view of the reflection device according to the second embodiment of the present invention. As shown in the figure, the first and second reflection devices 21, 22 are both plano-convex lenses having a convex surface 211 and a plane 212 opposing to the convex surface 211. Besides, a reflection layer 213 is coated on the convex surface 211. The convex surface 211 of the first reflection device 21 faces to the display path S1. The display information image forms the first reflection image by using the convex surface 211 of the first reflection device 21. The convex surface 211 of the second reflection device 22 faces to the reflection path R1 of the first reflection image. The first reflection image forms the second reflection image by using the convex surface 211 of the second reflection device 22. Likewise, the first reflection image is the shrunk image of the display information image by the first reflection device 21; the second reflection image is the shrunk image of the first reflection image by the second reflection device 22.

According to another embodiment of the present invention, one of the first and second reflection devices 11, 12 may be a plano-concave reflection lens while the other may be a plan-concave lens. By coordinating the plano-concave reflection lens and the plano-convex lens, the display information image may be shrunk. Alternatively, according to still another embodiment of the present invention, one of the first and second reflection devices 11, 12 may be a plano-concave reflection lens or a plano-convex lens while the other may be a plane mirror for surely image reflection. Then the display information image may be shrunk as well. The difference between the present embodiment and the previous one is the size of the shrunk display information image.

According to the above method of the present invention, by using the reflections of the first and second reflection devices 11, 12, the projection image of the optical device 13 is the shrunk display information image. Thereby, the drawback of being limited to small display devices owing to limitations in the HUD structure according to the prior art may be solved. Thereby, the shortcomings of fabrication difficulty and insufficient light transmittance for small display devices may be avoided.

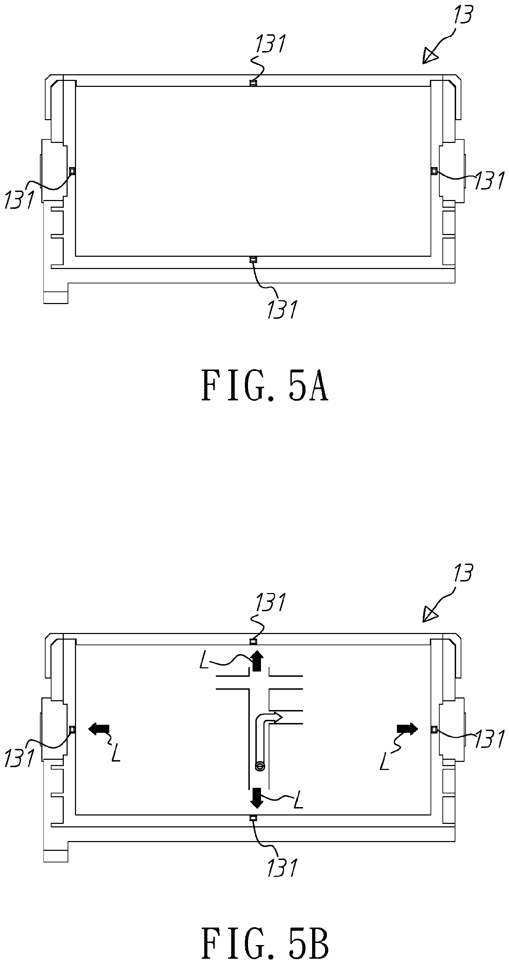

Please refer to Figures 5A and 5B, which show a schematic diagram and a usage schematic diagram of the optical device according to the present invention. As shown in the figures, the optical imaging apparatus 1 further comprises a plurality of alignment members 131, which are light-emitting diodes and disposed on the periphery of the optical device 13, respectively. The plurality of alignment members 131 emit alignment light spots corresponding to the periphery of the projection image of the optical device 13 for image alignment. Namely, the projection position of the display information image may be aligned.

In general, when a user installs the optical imaging apparatus 1 according to the present invention, the position of the optical device 13 should be adjusted so that the location of its projection image meets the requirements. While adjusting the optical device 13, the display information image includes alignment information L, which includes a plurality of alignment marks located at the center positions of the periphery of the display information image. When the display information image is reflected to the optical device 13, as shown in Figure 5B, the display information image and the alignment light spots of the alignment member 131 form a projection image. The projection image includes the plurality of alignment marks of the alignment information L in the display information image and the alignment light spots emitted by the alignment member 131. Then the user judges if the location and angle of the optical device 13 may enable the projection image to be a complete display information image according to whether the plurality of alignment marks of the alignment information L in the display information image align to the alignment light spots of the alignment member 131 for avoiding incomplete projection image of the display information image caused by shift of the optical device 13.

To sum up, the present invention provides an optical imaging apparatus, which uses the reflection module to shrink the display information image projected by the display device and the optical device to project the shrunk image. Thereby, the optical imaging apparatus may use a larger display device for displaying more display information images. In addition to ease of fabrication, larger display device have better image displaying effects and light transmittance. Moreover, the present invention further comprises the alignment member disposed on the periphery of the optical device. When the optical device emits the display information image, the display information image includes the alignment information. The plurality of alignment members emit marking light concurrently. The alignment information of the display information image aligns to the marking light of the alignment member for alignment the projection location of the display information image. Hence, incomplete projection images of the display information image caused by shift of the optical device may be avoided.

Accordingly, the present invention conforms to the legal requirements owing to its novelty, nonobviousness, and utility. However, the foregoing description is only embodiments of the present invention, not used to limit the scope and range of the present invention. Those equivalent changes or modifications made according to the shape, structure, feature, or spirit described in the claims of the present invention are included in the appended claims of the present invention.

## Claims

1. An optical imaging apparatus, comprising:
a display device, displaying a display information image;
a reflection module, disposed on the display path of said display information image, shrinking said display information image, and reflecting said display information image to form a reflection image; and
an optical device, disposed on the reflection path of said reflection image, and reflecting said reflection image to form a projection image.

2. The optical imaging apparatus of claim 1, wherein said reflection module includes:
a first reflection device, disposed on the display path of said display information image, shrinking said display information image, and reflecting said display information image to form a first reflection image; and
a second reflection device, disposed on the reflection path of said first reflection image, shrinking said first reflection image, reflecting said first reflection image to form a second reflection image, and said second reflection image being said reflection image.

3. The optical imaging apparatus of claim 2, wherein said first reflection device is a plan-concave reflection lens including a concave surface and a plane opposing to said concave surface; said plane is coated with a reflection layer; and said concave surface corresponds to said display device.

4. The optical imaging apparatus of claim 2, wherein said first reflection device is a plan-convex lens including a convex surface and a plane opposing to said convex surface; said convex surface is coated with a reflection layer; and said convex surface corresponds to said display device.

5. The optical imaging apparatus of claims 3 or 4, wherein said second reflection device is a plan-concave reflection lens including a concave surface and a plane opposing to said concave surface; said plane is coated with a reflection layer; and said concave surface corresponds to said first reflection device.

6. The optical imaging apparatus of claims 3 or 4, wherein said second reflection device is a plan-convex lens including a convex surface and a plane opposing to said convex surface; said convex surface is coated with a reflection layer; and said convex surface corresponds to said first reflection device.

7. The optical imaging apparatus of claim 1, further comprising a plurality of alignment members disposed on the periphery of said optical device.

8. The optical imaging apparatus of claim 7, wherein said plurality of alignment members are light-emitting diodes.

9. The optical imaging apparatus of claim 7, wherein said display information image further comprises a piece of alignment information, having a plurality of alignment marks; said plurality of alignment members emit a plurality of alignment light spots; said display information image and said plurality of alignment light spots of said plurality of alignment members form said projection image; and said plurality of alignment marks aligns to said plurality of alignment light spots, respectively.
